# EUROPEAN PATENT SPECIFICATION

(11) **EP 2 479 650 B1**
(45) Date of publication and mention of the grant of the patent: **16.09.2015**
(21) Application number: 11151689.4
(22) Date of filing: 21.01.2011
(51) Int. Cl.: G06F 3/03, G06F 3/042, G06F 3/041

(54) **Product with coding pattern**
Produkt mit Kodierungsmuster
Produit doté d'un motif de codage

(43) Date of publication of application: 25.07.2012
(73) Proprietor: Anoto AB, 227 22 Lund (SE)
(72) Inventor: Af Klinteberg, Claes, 245 42 Staffanstorp (SE); Sjögren, Anders, 226 47 Lund (SE)
(74) Representative: Grönlund, Tim Linus Wilhelm

(56) References cited:
- EP-A1- 2 189 882
- JP-A- 2007 133 824
- US-A1- 2009 279 170

## Description

### Field of the Invention

The invention relates to user interaction with a surface, especially a display. In particular, the invention relates to a product to be placed on the surface, the product being provided with a coding pattern for allowing recording of information encoded on the display.

### Background Art

Digital devices are used in all aspects of life. It is becoming increasingly common that the digital devices have some kind of display for presenting information to a user. These digital devices could be TV screens, computer monitors, tablet PCs, mobile phones, or terminals, such as self-service kiosks. The digital devices also allow a user to input information in order to interact with the device. In this regard, there are a number of different input devices, such as keyboards, mice, joysticks, and digital pens.

When interacting with a digital device having a display, it is often very convenient to be able to input information on the display itself. This allows the user to always focus on the display and not shift the eyes between the display and an input device.

In this regard, touch screens have been developed. The touch screens are becoming increasingly popular as the sensor technology is becoming cheaper and more accurate. However, the cost of a touch sensing technology is highly dependent on the size of the display. This implies that when a large display is to be used, a touch sensing technology becomes very expensive. Therefore, there is a need for a cheaper technology for sensing positions on a display.

Using a passive position-coding pattern for coding positions is known in the field of electronic capture of handwriting on paper. Here, the sensor is arranged in a digital pen. This implies that there is no advanced technology arranged in the surface. Hence, the cost of providing a surface with a position-coding pattern is rather low and virtually independent of the size of the surface. Instead, the sensor is placed in the digital pen and, therefore, the sensor size is always the same and need not be arranged in the entire surface.

In WO 01/48591, it is suggested that a position-coding pattern is integrated in or arranged upon a computer screen. Alternatively, the position-coding pattern could be displayed electronically on a computer screen or some other display screen. However, the first solution requires that the display is manufactured with a position-coding pattern. This implies that the technology could not be used for old displays, which have already been produced without a position-coding pattern. The second solution is difficult to accomplish, since the position-coding pattern needs to be very accurately generated in order to be properly detected.

The position-coding pattern may alternatively be provided on a transparent film or plate which may be removably attached to a display. The transparent film may thus be sold separately and attached to any old or new display. Also, the transparent film may be moved between different displays such that a position-sensing technology is provided where it is needed at the moment.

The position-coding pattern may be arranged to be optically detectable. This allows the pattern to be printed onto the transparent film and the pattern to be detected using imaging optics and an image sensor.

In the development of a transparent film carrying a position-coding pattern, two different aspects need to be considered. First, the optical characteristics of dots in the position-coding pattern need to differ from the optical characteristics of the surrounding material of the film such that the position-coding pattern may be detected in an image. Second, the optical characteristics of the transparent film and the position-coding pattern need to be such that the visual appearance of an underlying display is minimally affected.

According to JP 2007-133824, a position coordinate encoding medium comprises a dot pattern arranged on a base material. The dot pattern diffusely scatters light emitted from a digital pen, whereas the base material transmits, absorbs or reflects the light emitted from the digital pen. The dot pattern can be formed by printing white ink or white pigment on the base material. When a position coordinate encoding medium having a base material which reflects the light emitted from the digital pen is used, the light emitted from the digital pen is reflected by the base material in a direction outside the light-receiving range of the image sensor of the digital pen. In contrast, the light emitted from the digital pen is diffusely scattered by the dots of the dot pattern and a portion of the light is received by the image sensor. Thus, the output signal of the image sensor is recognized as bright dots present in a dark base material.

However, since the dots diffusely scatter light emitted from the digital pen, only a small fraction of the radiation emitted from the digital pen will be scattered back to the image sensor. Therefore, the captured image may be sensitive to noise levels and it may be difficult to detect the coding pattern in the image.

Also, the white ink of the dot pattern affects the visual appearance of the display. The display image will have a lower contrast giving a milky impression to the display. The lower contrast may be due to the white ink diffusely reflecting ambient light. The lower contrast of the display image deteriorates the user experience of the display.

Other transparent films carrying a position-coding pattern for use with a display are known from JP2001-243006, JP2002-149331 and JP2009-043218. However, these films are either provided with a pattern constituted of special inks or the film itself is constituted of several layers for providing desired optical characteristics. Hence, the films may be complex and expensive to produce.

### Summary of the Invention

It is an object of the invention to provide a product with a coding pattern, which product is suited for application to various displays. It is a further object of the invention that the coding pattern only affects a displayed image to a small extent.

According to a first aspect of the invention, it relates to a product, which comprises a sheet, which is transparent to visible radiation, and a coding pattern, which comprises scattering dots arranged on the sheet to code information, the scattering dots being arranged to diffusely scatter radiation incident thereon, the coding pattern further comprising reflecting dots arranged on the sheet in correspondence with the scattering dots, the reflecting dots being arranged to specularly reflect radiation incident thereon.

The product is suitable for use with a reading device, which comprises a radiation source for emitting radiation towards the product and an image sensor, which captures an image of the irradiated coding pattern on the product. According to the invention, the coding pattern comprises both scattering dots and reflecting dots. The arrangement of reflecting dots in correspondence with the scattering dots implies that radiation which is transmitted through a scattering dot will be reflected by the corresponding reflecting dot back towards the scattering dot. Some of this reflected radiation will now reach the image sensor instead. Thanks to the coding pattern comprising reflecting dots, the amount of radiation reaching the image sensor will be improved. Therefore, the product allows the coding pattern to be more easily detected compared to a coding pattern merely comprising scattering dots and no reflecting dots.

The product is suited to be arranged overlying a display or to be integrated with a display. This implies that the product may provide a coding pattern for coding information on a display surface, facilitating user interaction with the display.

The scattering dots and reflecting dots need not diffusely scatter or reflect, respectively, any type of radiation. However, the diffuse scattering of the scattering dots and the reflection of the reflecting dots should occur for radiation being emitted onto the dots by the radiation source of a reading device, which is to be used with the product.

In an embodiment, the scattering dots are arranged to diffusely scatter optical radiation incident thereon and the reflecting dots are arranged to diffusely reflect optical radiation incident thereon. Optical radiation should be construed to mean any electromagnetic radiation in the wavelength range between 100 nm and 1 mm, including ultraviolet radiation, visible radiation and infrared radiation.

The radiation source may be arranged to emit visible or infrared radiation. In particular, the radiation source may be arranged to emit near infrared radiation. However, the radiation source may alternatively be arranged to emit radiation of another wavelength, such as ultraviolet radiation.

In an embodiment, the scattering dots are coloured to absorb visible radiation while diffusely scattering infrared radiation. This implies that the scattering dots will appear as dark spots to a user of the display, while the scattering dots will appear as bright dots to an image sensor detecting infrared radiation. This may improve the visual appearance of the display, since the dark scattering dots will not give a milky impression of the display. The dark dots may therefore be almost invisible to the user. Especially, if the brightness of the display is increased, the effect of the dark spots in the pattern on the display image can be compensated for.

In another embodiment, the reflecting dots may be arranged to reflect visible and infrared radiation. This implies that the reflecting dots may locally prevent radiation from the display to reach an observer and, hence, in the absence of ambient light, the pair of a scattering dot and a reflecting dot is experienced by a user as a dark spot in the display image. This may also improve the visual appearance of the display image.

The reflecting dots may comprise a smooth surface. In an embodiment, the reflecting dots may comprise a metallic material, which may provide a smooth surface interface. In this manner, the reflecting dots may be highly reflective to incident radiation. Using a metallic material, reflecting dots that reflect visible and infrared radiation may be easily applied to the product requiring only one layer of material.

The reflecting dots that reflect visible and infrared radiation may preferably be combined with scattering dots that are coloured to absorb visible radiation. This prevents the reflecting dots from deteriorating the visual appearance of the display by increasing the milky impression due to ambient light also being back scattered to a larger degree.

In yet another embodiment, the reflecting dots may be arranged to reflect only infrared radiation. This implies that the reflecting dots will not affect the visual appearance of the display image, while the reflecting dots will still improve the amount of radiation from the dots of the pattern that will reach an image sensor of a reading device. Also, the amount of back scattered ambient light decreases in comparison to reflecting dots that reflect both visible and infrared radiation.

The reflecting dots may comprise multiple layers of dielectric material. The multiple layers of dielectric material may be designed such that the reflecting dots are arranged to reflect only specific wavelengths, such as infrared radiation.

In an embodiment, the scattering dots comprise white ink or white pigment. The scattering dots may thus be printed onto the transparent sheet. White ink or pigment may be easily accessible and generally diffusely scatters radiation of both visible and infrared wavelengths. The white ink or pigment may be easily combined with a coloured ink or pigment for providing scattering dots, which diffusely scatter infrared radiation while absorbing visible radiation.

In an embodiment, the scattering dots and the reflecting dots are arranged on a common side of the transparent sheet. The reflecting dots may be arranged between the transparent sheet and the scattering dots. In such an arrangement, the transparent sheet should be overlaid on the display such that the common side on which the scattering dots and the reflecting dots are arranged is farthest away from the display. Alternatively, the scattering dots may be arranged between the transparent sheet and the reflecting dots. In such an arrangement, the transparent sheet should be overlaid on the display such that the common side on which the scattering dots and the reflecting dots are arranged is closest to the display.

In an embodiment, each reflecting dot is smaller than the corresponding scattering dot. The reflecting dot will thus be entirely covered by the scattering dot, as seen by a user. This implies that the user will not see a reflecting surface, which may otherwise negatively affect the visual appearance of the display. Further, by making the reflecting dot smaller than the corresponding scattering dot, the reflecting dot will not be seen by a user, even if the user looks at the display and overlying product from an oblique angle.

The scattering dots may code information by their displacement from a nominal position. This implies that information may be coded merely by the position of the scattering dot and not by the shape of the scattering dot. Hence, a simple shape of the scattering dots may be used, which makes applying of the scattering dots to the transparent sheet fairly simple.

According to a second aspect of the invention, it relates to a display, which comprises a coding pattern, which comprises scattering dots arranged on a surface on or inside the display to code information, the scattering dots being arranged to diffusely scatter radiation incident thereon, the coding pattern further comprising reflecting dots arranged on the surface in correspondence with the scattering dots, the reflecting dots being arranged to specularly reflect radiation incident thereon.

The advantages of the coding pattern according to the first aspect of the invention as provided above are also relevant for a display which is provided with the coding pattern integrated in the display.

### Brief Description of the Drawings

The embodiments of the invention will now be described in more detail with reference to the accompanying drawings.
Fig. 1 is a schematic view of a display with a product overlaid on the display.
Fig. 2 is a schematic magnified view of a product.
Figs 3A-E are schematic views of cross-sections of different embodiments of the product.
Figs 4A-F are schematic views of a coding pattern.

### Detailed Description of a Preferred Embodiment

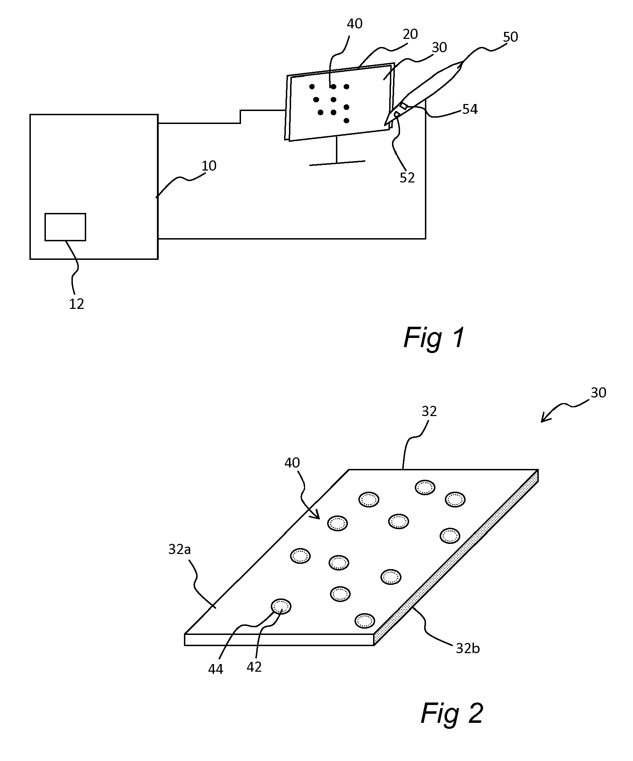

Referring to Fig. 1, a system for providing user interaction with an electronic device 10 will be briefly described. The electronic device 10 comprises a processor 12, which is connected to a display 20 for providing output to a user and presenting results of information processed by the processor 12. A product 30 is fixedly or removably attached to the display 20. The product 30 is provided with a coding pattern 40. The coding pattern 40 codes information on the product 30. A user may interact with the processor 12 using a reading device 50 which is able to read the coding pattern 40. The reading device 50 may comprise a radiation source 52 for irradiating the coding pattern 40, imaging optics (not shown) and an image sensor 54 for capturing an image of the irradiated coding pattern 40. The captured image may be analyzed for decoding information coded by the imaged part of the coding pattern 40. The user may thus point the reading device 50 to different parts of the display, thereby triggering different parts of the coding pattern 40 to be read by the reading device 50. In this way, the reading device 50 is able to record information encoded by the coding pattern 40 and send the recorded information as input to the processor 12. The processor 12 may process the recorded information and present results to the user by updating an image on the display 20.

The product 30 provided with a coding pattern 40 may be applied to any kind of display for allowing user interaction with an electronic device 10 via the coding pattern 40. Hence, the electronic device 10 may, for instance, be a personal computer (PC), such as a desktop computer, a laptop, a tablet PC, or a handheld PC, a mobile phone, a video game console, or a terminal, such as a self-service kiosk or an arcade machine. The processor 12 is typically arranged within the electronic device 10. The processor 12 may comprise a display controller for creating a signal which may be correctly interpreted by the display 20 for outputting an image on the display 20.

The display 20 may be a separate unit, which may be connected to the electronic device 10 and the processor 12. The display 20 may be connected to the electronic device 10 via a cable or a wireless connection using e.g. a radio signal. Such a display 20 may also be connectable to different kinds of electronic devices 10 for providing a user interface to the electronic device 10 presently connected to the display 20. Examples of such displays 20 are TV screens or computer monitors using any type of technology for displaying images, such as organic light-emitting diode displays, cathode-ray tube screens, liquid crystal displays or plasma display panels. Alternatively, the display 20 may be integrated with the electronic device 10 in a single physical unit. Examples of such displays 20 are laptop screens, or displays of a tablet PC, a handheld PC, an e-book reader, a mobile phone, a video game console or a terminal, such as a self-service kiosk or an arcade machine.

The reading device 50 may be any kind of device which is able to read the coding pattern 40. For instance, the reading device 50 may be implemented in the form of a digital pen. The digital pen may preferably not leave a trace on the product 30, since such traces may interfere with future user interaction with the display 20 on which the product 30 is arranged. Hence, the digital pen may be provided with a stylus tip for pointing to the product 30 without leaving a trace on the product 30. An example of a digital pen is provided in WO 2009/096886.

Referring now to Fig. 2, a product 30 which is provided with a coding pattern 40 will be further described. The product 30 may be integrated with the display 20 and may be attached to the display 20 during manufacturing of the display 20. In one embodiment, the coding pattern 40 may be arranged to be integrated with metal gates which are arranged between the pixels of the display 20, such that the coding pattern 40 may be arranged on these metal gates. In another embodiment, the product 30 may be mounted in the display 20. A display 20 typically comprises several layers on top of the pixels for e.g. rotating the polarization of the emitted radiation, polarizing the emitted radiation or diffusing the emitted radiation. The product 30 may be arranged as a sheet that is mounted anywhere in the display on top of the pixels of the display and between any of the other layers of the display 20.

According to an alternative, the product 30 may be delivered separately and may be attached to the display 20. The product 30 may be removably attached to the display 20 such that the product 30 may be moved between different displays 20.

The product 30 may be formed of a sheet or film 32, which is transparent to visible light. This implies that the film 32 will not affect the visibility of the displayed image, when the product 30 is applied to the display 20. The thickness of the sheet or film 32 may vary depending on what type of display 20 the product 30 is to be used with. The product 30 may be formed from a suitable plastic material having appropriate optical and physical characteristics. The product 30 may for instance comprise a sheet or film 32 formed by polycarbonate or polymethyl methacrylate (acrylic glass).

The display 20 may or may not be prepared for allowing touch interaction with the display surface. If the display 20 is prepared for touch interaction, it may be provided with a protective sheet, which may distribute applied pressure such that the applied pressure in touching the display does not damage the display 20. However, if the display 20 is not prepared for touch interaction, the product 30 may need to be designed to protect the display 20 from being damaged by the product 30 being touched. In such cases, the product 30 may be formed by a relatively thick sheet, which may distribute the applied pressure over a larger surface. Hence, in order to protect a display 20, the product 30 may be formed by a sheet having a thickness of typically a few mm.

The product 30 may be held in a constant relationship to the display 20. This implies that the relationship between the coding pattern 40 and the display positions does not change over time. The ability to hold the product 30 in a constant relationship to the display 20 depends on several factors. For instance, by providing a thick and rigid product 30, the product 30 may stay in place once mounted to the display 20. For instance, if the product 30 is to be used with large TV screens, a large-size product 30 may be needed. Hence, the product 30 may be formed from a sheet having a thickness in the magnitude of 1 mm in order to provide a rigid product 30. The thick sheet product 30 gives a large-size product 30 a shape-retainability and rigidness such that the product 30 may be firmly held in a constant relationship to the display 20.

On the other hand, a small-size product 30 may be formed by a thin film, having a thickness of much less than 1 mm, typically 0.05-0.5 mm. Such a thin film may be suitable for arranging the product 30 in a constant relationship to e.g. a mobile phone display or a laptop screen. A thin film product 30 may also be sufficiently elastic to be rolled up for facilitating transportation of the product 30. This implies that the product 30 may be carried by a user and be attached to any display 20, when the user wants to be able to interact with the display 20.

When the product 30 is applied to a display 20, the product 30 may need to be calibrated to the display surface in order to correlate positions on the product 30 to positions on the display surface. The calibration may ensure that the expected functions are provided when a user points to displayed icons or images and the coding pattern 40 in corresponding positions on the product 30 are detected by a reading device 50. Calibration may typically be accomplished by the display 20 displaying a number of calibration marks and the user pointing to these marks using the reading device 50, whereby the reading device 50 may detect the coding pattern 40 of the product 30 that is overlaid on the respective calibration marks.

The product 30 may be intended to be attached to displays 20 of a specific size. In this regard, the product 30 may be of approximately the same size as the display 20 with which it is to be used. This implies that the product 30 may be arranged in an edge-to-edge relationship to the display 20 so as to fit snugly to the display 20. However, the product 30 may alternatively be intended to be used with displays 20 of different sizes. Then, the product 30 may be attached to the display 20 such that the product 30 protrudes outside at least one of the edges of the display 20. It may also be contemplated that the product 30 only covers a part of the display 20 in order to provide interaction with that specific part of the display 20. The product 30 may be rectangular in order to fit to the shape of most displays 20.

One or more portions of the product 30 may be provided with an adhesive material allowing the product 30 to be attached to the display 20. Alternatively, the product 30 may have a sticky surface, such that when applied to a display 20, it sticks to the display surface. As a further alternative, the product 30 and the display 20 may be provided with corresponding one or more patches of hook-and-loop fasteners, such as Velcro® fasteners. As yet another alternative, the product 30 may be provided with a clip for receiving an edge of the display 20. Of course, the display 20 may instead or also be provided with a means for the product 30 to be attached to the display 20, such as an adhesive material, a clip or a holder for receiving the product 30.

As shown in Fig. 2, the product 30 may comprise a sheet 32, which is transparent to visible radiation. The sheet 32 has an upper side 32a and a lower side 32b. In the context of this application, the upper side 32a of the sheet 32 is construed to mean the side of the sheet 32 which is closest to a reading device 50 and farthest away from the display 20, when the sheet 32 is applied to the display 20. A coding pattern 40 is applied to the sheet. The coding pattern 40 may comprise scattering dots 42, which are arranged to diffusely scatter radiation incident thereon. The coding pattern 40 may further comprise reflecting dots 44, which are arranged to specularly reflect radiation incident thereon. The reflecting dots 44 are indicated by dotted lines in Fig. 2, since they are arranged below the scattering dots 42 as seen from a reading device 50.

The reflecting dots 44 may be arranged in correspondence with the scattering dots 42 such that each reflecting dot 44 is arranged in the same position on the sheet 32 as the corresponding scattering dot 42.

The reflecting dots 44 may be arranged in registration with the scattering dots 42. The centre of a reflecting dot 44 may thus be coincident with the centre of the corresponding scattering dot 42.

The scattering dots 42 may be adapted to diffusely scatter radiation emitted from the radiation source 52 of the reading device 50. The radiation source 52 may be arranged to emit near infrared radiation. This implies that it may be sufficient that the scattering dots 42 diffusely scatter near infrared radiation of a wavelength range including the wavelength of the radiation source 52. However, the scattering dots 42 may be arranged to diffusely scatter radiation of other wavelengths as well in the infrared radiation range and in the visible range. For instance, if the radiation source 52 of the reading device 50 emits red light, the scattering dots 42 may be arranged to diffusely scatter red light. It may be possible to detect the scattering dots 42 using an image sensor 54 that is sensitive to visible wavelengths even though the display 20 may emit radiation in these wavelengths. This is possible since the reading device 50 irradiates the coding pattern 40 with the relevant wavelength implying that the radiation from the display 20 may be much weaker than the radiation diffusely scattered from the scattering dots 42.

The scattering dots 42 may be formed by white ink or white pigment, which may be printed onto the transparent sheet 40. The scattering dots may be formed by substances commonly used as white optical diffusers, such as titanium dioxide (TiO₂), barium sulfate (BaSO₄), zinc sulfide (ZnS), finely ground glass or any combination thereof. The scattering dots may be arranged to diffusely scatter radiation incident thereon in all directions. Hence, radiation incident on the scattering dots 42 from the radiation source 52 of the reading device 50 will be partly back-scattered towards the reading device 50. Some of this back-scattered radiation will reach the image sensor 54 of the reading device 50 allowing the coding pattern 40 to be detected as bright spots in a dark background.

The scattering dots 42 may alternatively be formed by applying a material having a rough surface onto the sheet 32. The rough surface may consist of particles. The rough surface implies that radiation incident on the scattering dot will be diverted in all directions.

The scattering dots 42 may, according to a further alternative, be formed by roughening the surface of the sheet 32 in the positions of the scattering dots 42. Such roughened surface may be formed in the sheet 32 by e.g. blasting the surface of the sheet 32.

The scattering dots 42 may typically absorb some of the incident radiation, having an absorptance of a few %. Given an absorption coefficient and a scattering coefficient of the material of a scattering dot 42, a thickness of the scattering dot 42 may be optimized for providing as much back-scattered radiation as possible.

The coding pattern 40 may also comprise reflecting dots 44, which are arranged to reflect essentially all radiation incident thereon. The reflecting dots 44 may be formed by a material having a smooth surface. The reflecting dots 44 may comprise a metallic material, which may provide a smooth surface. In this manner, the reflecting dots 44 may be highly reflective to incident radiation and may reflect both visible and infrared radiation.

Alternatively, the reflecting dots 44 may be arranged by multiple layers of dielectric material. The layers of dielectric material may be arranged such that the reflecting dots 44 may be reflecting specific desired ranges of wavelengths. The reflecting dots 44 may be arranged to reflect infrared radiation while being transparent to visible radiation.

The reflectivity of the reflecting dots 44 should be as high as possible. Preferably, the reflectivity is very close to 100%.

The reflecting dots 44 are arranged in correspondence with the scattering dots 42. This implies that the coding pattern 40 comprises a corresponding reflecting dot 44 for each scattering dot 42. The corresponding reflecting dot 44 is arranged under the scattering dot 42 as seen from the reading device 50. The radiation incident on the scattering dots 42 will be partly forward-scattered. The forward-scattered radiation may reach the reflecting dot 44 and be reflected back and therefore back-scatter towards the reading device 50. The reflecting dots 44 will therefore increase the amount of radiation that reaches an image sensor 54 of the reading device 50. Hence, it may be easier to properly detect the coding pattern 40 in the captured image by the image sensor 54.

The scattering dot 42 may be larger than its corresponding reflecting dot 44. This implies that the scattering dot 42 hides the reflecting dot 44 as seen by a user, such that the user will not experience reflection from the reflecting dot 44 of ambient radiation.

When the product 30 is arranged overlying a display 20, the coding pattern 40 on the product 30 may somewhat affect the appearance of the display 20. White scattering dots 42 may lower the contrast of the display image giving a milky or muddy impression to the display 20. The lowering of the contrast may be due to white ink diffusely reflecting ambient light and this reflected ambient light disturbing the visual appearance experienced by a user.

The scattering dots 42 may be coloured by ink or pigment that absorbs visible radiation. The scattering dots 42 may be coloured with cyan, magenta and yellow colour in order to absorb radiation of all visible wavelengths. This implies that the scattering dots 42 may appear dark to a user, while still diffusely scattering infrared radiation that may be emitted by the radiation source 52 of the reading device 50. The coloured scattering dots 42 will not scatter ambient visible radiation and may therefore affect the contrast of the display image less than white scattering dots. The coloured scattering dots 42 may, however, be seen as small dark dots in the display image. The effect on the visual appearance of the display image by the small dark dots may be decreased by increasing the brightness of the display 20. Hence, the effect of coloured scattering dots 42 on the visual appearance of a display 20 may be entirely or almost entirely eliminated.

Further, since the coding pattern 40 also comprises reflecting dots 44 arranged in correspondence with the scattering dots 42, the effect of the scattering dots 42 on the display image may be altered. If the reflecting dots 44 are arranged to reflect both visible and infrared radiation, the reflecting dots 44 may appear dark to a user, if the display 20 is viewed in a dark environment with no or little ambient light. Hence, the sum of the effect of the scattering dots 42 and the reflecting dots 44 is that the user may see a dark spot in the display image, and the effect on the display image may again be decreased by increasing the brightness of the display 20.

According to an alternative, the reflecting dots 44 are arranged to only reflect infrared radiation. In such case, the reflecting dots 44 may appear transparent to a user. This implies that the reflecting dots 44 will transmit radiation emitted by a display 20 and therefore not decrease the intensity of the display image.

The coding pattern 40 exhibits a spatial frequency originating from the distance between the adjacent scattering dots 42. The pixels of the display 20 exhibit a spatial frequency originating from the distance between adjacent pixels. The spatial frequencies of the coding pattern 40 and the display pixels may combine to form a moiré pattern, which may disturb the appearance of the display image. The moiré pattern may be invisible if the combined spatial frequencies of the coding pattern 40 and the display pixels are outside a range of spatial frequencies visible to the human eye. Hence, the coding pattern 40 should be arranged in relation to the display pixels such that a moiré pattern is not visible to the user. This may be accomplished by changing the spatial frequency of the coding pattern 40 to get a moiré pattern that does not fall within the resolution of the eye of the observer. Alternatively or additionally, it may be achieved by rotating the coding pattern 40 such that the spatial frequencies of the coding pattern 40 do not extend in parallel direction to the spatial frequencies of the display pixels.

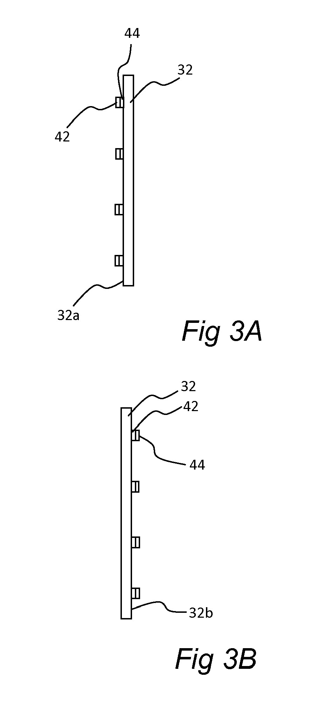

As shown in Fig. 3A, the scattering dots 42 and the reflecting dots 44 may both be arranged on the upper side 32a of the transparent sheet 32. In this embodiment, the radiation emitted from the radiation source 52 of the reading device 50 need not pass through the transparent sheet 32 before reaching the scattering dots 42. This implies that as much radiation as possible will be diffusely scattered back towards the image sensor 54 for use in detecting the coding pattern 40, since the radiation will not have to pass through the transparent sheet 32 avoiding any absorption in the transparent sheet 32 or reflection of radiation in the interface when the radiation enters or exits the transparent sheet 32.

The scattering dots 42 may be arranged immediately on top of the reflecting dots 44. The reflecting dots 44 are arranged on the transparent sheet 32 and the scattering dots 42 are arranged on top of the reflecting dots 44, such that the scattering dots 42 cover the reflecting dots 44 as seen by a user. The reflecting dots 44 may be of the same size as the scattering dots 42 or only marginally smaller, without the reflecting dots 44 being visible to the user.

According to an alternative, a thin layer of dielectric material may be applied on the reflecting dots 44, between the reflecting dots 44 and the scattering dots 42. This layer of dielectric material needs to be very thin in order to avoid that the reflecting dots 44 become visible underneath the scattering dots 42 if the product 30 is being viewed from an oblique angle. Hence, the layer of dielectric material may typically be 1-5 µm thick.

The layer of dielectric material may facilitate the scattering dots 42 attaching to the reflecting dots 44. The use of the layer of dielectric material between the reflecting dots 44 and the scattering dots 42 may be especially suitable when the reflecting dots 44 are made of metallic material.

As shown in Fig. 3B, the scattering dots 42 and the reflecting dots 44 may both be arranged on the lower side 32b of the transparent sheet 32. In this embodiment, the scattering dots 42 and the reflecting dots 44 may be arranged closer to the pixels of the display 20 compared to the embodiment of Fig. 3A. The scattering dots 42 are applied to the lower side 32b of the transparent sheet 32 and the reflecting dots 44 are applied to the scattering dots 42, such that the scattering dots 42 cover the reflecting dots 44 as seen by a user.

By arranging the coding pattern 40 as close to the display pixels as possible, the relationship between the coding pattern 40 and the display pixels as seen by a user will not be affected by the user moving or looking at the display 20 from different angles. This implies that the relationship between the spatial frequencies of the coding pattern 40 and the display pixels will not be affected or be minimally affected by the viewing angle of the user. Therefore, it is sufficient to consider this constant relationship between the spatial frequencies in order to ensure that a moiré pattern is not visible to a user. Hence, it may be easier to avoid a visible moiré pattern occurring when the coding pattern 40 is overlaid on a display 20.

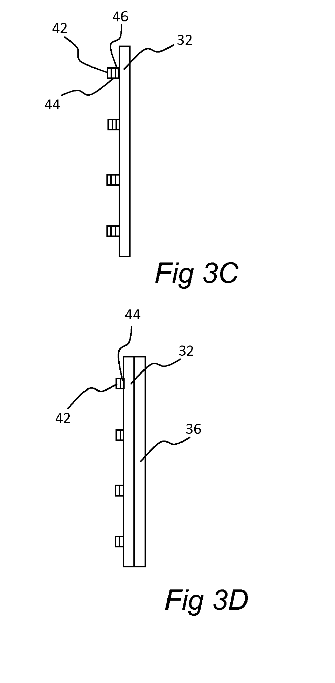

As shown in Fig. 3C, the coding pattern 40 may further comprise an absorbing dot 46 for absorbing visible radiation. The absorbing dot 46 may be arranged under the reflecting dot 44. This absorbing dot 46 may decrease the amount of visible radiation from the display 20 that is reflected by the reflecting dots 44 back into the display 20. This may improve the visual appearance of the display image.

The product 30 may also be provided with additional layers further affecting the detection of the coding pattern 40 by the reading device 50 and/or the visual appearance of the coding pattern 40 as applied on the display. In a special case, where the product 30 is to be used with a reading device 50 that emits infrared radiation, the product 30 may also comprise an absorbing or reflecting layer, as shown in Fig. 3D, to absorb or reflect infrared radiation. The absorbing layer 36 may be arranged under the sheet 32. The absorbing layer 36 may absorb infrared radiation emitted by the light source 52 of the reading device 50. Thus, infrared radiation that has been transmitted through the sheet 32 may be absorbed by the absorbing layer 36. This decreases the amount of infrared radiation that reaches the display 20 and is back-scattered by the display 20 towards the image sensor 54 of the reading device 50. The radiation being back-scattered by the display 20 needs to pass back through the absorbing layer 36 again before reaching the image sensor 54, whereby the amount of radiation eventually reaching the image sensor 54 will be further decreased. Hence, the image captured by the image sensor 54 will not be disturbed by back-scattered radiation from the display 20.

The absorbing layer 36 may be applied to any of the embodiments of the product 30 shown in Figs 3A-3C. The absorbing layer 36 may be arranged anywhere on the product 30 as long as it is arranged below, i.e. closer to the display 20, than the reflecting dots 44. In one embodiment, the sheet 32 may be provided in the form of the absorbing layer 36.

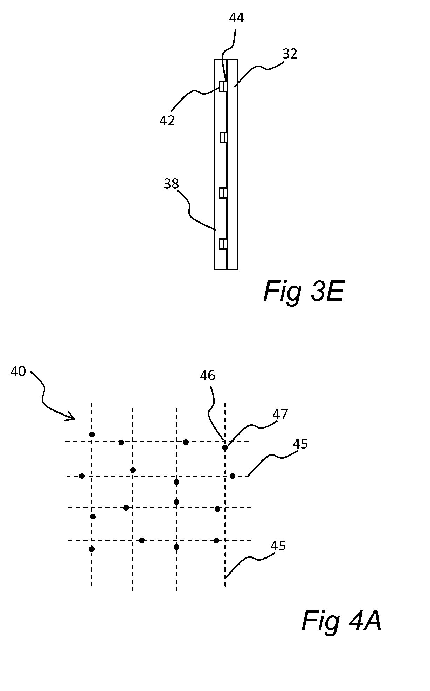

As shown in Fig. 3E, the product 30 may also comprise a topmost protective layer 38. The protective layer 38 is the layer of the product 30, with which a reading device 50 makes contact. The protective layer 38 may provide a hard and durable surface, which may protect both the display 20 and the other layers of the product 30 as well as the coding pattern 40 from wear and tear during touching or writing with the reading device 50 on the product 30. The protective layer 38 may be arranged to be very thin with a thickness of a few µm. By providing a thin protective layer 38, the image sensor 54 of the reading device 50 may be close to the coding pattern 40 when the reading device 50 is arranged in contact with the product 30. This implies that the distance between the image sensor 54 and the coding pattern 40 is only slightly affected by the angle between the image sensor 54 and the product 30. Hence, the risk of the coding pattern 40 coming out of focus of the image sensor 54 decreases with a thinner protective layer 38. Also, since radiation needs to travel a short distance through a thin protective layer 38, any effects of absorption or scattering of radiation in the protective layer decreases with a thinner protective layer 38.

All layers in the product 30 may be antireflection coated to prevent specular reflection of infrared radiation from the layers.

Alternatively, the reading device 50 may be mounted such that a specular reflex of radiation from the radiation source 52 will not reach the image sensor 54. This may be accomplished by the reading device 50 comprising two radiation sources 52 in different relationships to the image sensor 54. The reading device 50 may then switch which radiation source 52 to use depending on the angle between the reading device 50 and the product 30.

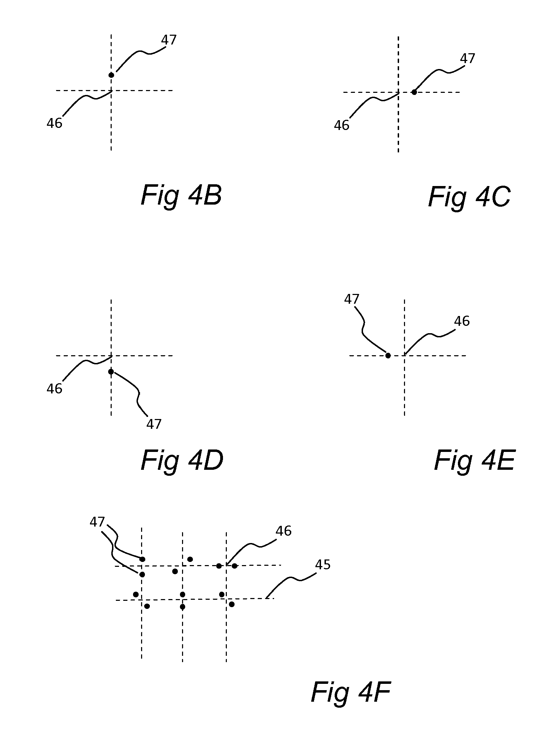

Referring now to Figs 4A-F, the coding pattern 40 will be further described. The coding pattern 40 may provide a graphical coding of information. In this regard, the coding pattern 40 may comprise marks arranged according to a grid, wherein the placement and/or morphology of the marks code information. Each mark as described below may be implemented on the product 30 in the form of a scattering dot 42 and a corresponding reflecting dot 44.

In one embodiment, illustrated in Fig. 4A, the coding pattern 40 comprises virtual grid lines 45, which are called virtual because they are not actually presented on the product 30. Therefore, the grid lines 45 are marked by dashed lines in Fig. 4A. The virtual grid lines 45 may be perpendicular to each other forming an orthogonal grid. The virtual grid lines 45 intersect in grid intersections 46, wherein the grid intersections 46 form nominal points. The information of the coding pattern 40 may be coded by a mark 47, which is displaced in relation to its nominal point 46. The direction of displacement of the mark 47 from the nominal point 46 determines a value coded by the mark 47. For instance, the mark 47 may be allowed to be displaced in one of four different directions, as illustrated in Figs 4B-E. Then, each mark 47 will code two bits of information. The marks 47 may be displaced along one of the virtual grid lines 45 as illustrated in Figs 4B-E. This type of coding pattern 40 is further described in US 6,663,008 and US 6,667,695.

Marks may also be provided in the grid intersections 46 or some of the grid intersections 46. This may help in detecting the virtual grid lines 45 and therefore facilitate decoding of the coding pattern 40. Further, each grid intersection 46 need not be associated with a mark 47 for coding information. In one embodiment, grid intersections 46 which are provided with a mark for indicating the grid lines 45 have no associated mark 47 for coding information, whereas grid intersections 46 which are not provided with a mark for indicating the grid lines are associated with a mark 47 for coding information.

Some nominal points 46 or each nominal point 46 may be associated with a plurality of marks 47 for coding information. This may be used for coding further information in relation to one nominal point 46. In one embodiment, illustrated in Fig. 4F, a nominal point 46 is associated with a pair of marks 47, which are arranged on opposite sides of the nominal point 46 such that the center of gravity of the pair of marks 47 is in the nominal point 46. This facilitates detection of the virtual grid lines 45.

The marks 47 may be formed by squares, triangles or any other simple shape. In one embodiment, the marks 47 are formed by circular dots, which may be easy to print. Alternatively, the marks 47 may have differing shapes, wherein the shape of a mark 47 may contribute to the coding of information of the coding pattern 40.

The virtual grid lines 45 need not be arranged to form an orthogonal grid. In one alternative, a rhombic grid may be formed with the virtual grid lines 45 arranged at an angle of 60° to each other. In further alternatives, the virtual grid lines 45 may form a triangular or hexagonal grid.

The coding pattern 40 may be a position-coding pattern, which is arranged to code positions. In one embodiment, a cell of a plurality of marks 47 may be used for coding one position and possibly also an identifier, which may be used for distinguishing the product 30 from other products. Such cells may be arranged side-by-side across the surface of the product 30 to code positions across the surface. In another embodiment, as described in e.g. US 6,663,008, the position-coding pattern has a windowing property, which means that each part of a predetermined size, is unique within the position code and thus codes an unambiguous position in the position-coding pattern. Each position may be coded by a plurality of simple symbols, like dots, and at least some of a plurality of symbols which are used for coding a first position also contribute to the coding of a second adjacent position.

The position-coding pattern may e.g. use 6 x 6 marks 47 for coding one position. This enables coding of positions in a very large area, such that different parts of the position-coding pattern may be arranged on different products 30. Hence, instead of using a coded identifier for identifying the product 30, the recorded position may identify the product 30 as each product 30 may be arranged to code different ranges of positions. This implies that the position-coding pattern 40 on a product 30 may code absolute positions within a large area. Hence, the origin of coordinates of the area need not be encoded on the product 30 itself. The absolute positions may be converted to local positions within a subset of the large area encoded by the position-coding pattern. The subset may encode positions within an area corresponding to the product surface. This may facilitate interpreting the absolute positions as local positions on the product surface.

However, it may not be necessary to use such a large position-coding pattern. In another embodiment, fewer marks 47 are used for coding one position. This may make the decoding of a position faster.

In a further embodiment, the marks 47 are regularly placed across the product surface. The marks 47 may have different shapes and/or sizes in order to code information. Each mark 47 may have a complex structure in order to enable coding of a lot of information. Hence, a position on the product 30 may be coded by a single mark 47.

The coding pattern 40 may form a structure which is periodic over the product surface. The coding pattern 40 may comprise marks 47 arranged according to a grid, wherein the grid defines the periodicity of the marks 47 on the surface. A grid size of the coding pattern 40 may be defined as the distance between two adjacent grid lines 45 in the coding pattern 40. The grid size of the coding pattern 40 also defines a spatial frequency of the marks 47 on the product 30. The spatial frequency of the marks 47 will be given by the grid size, even if individual marks 47 are displaced in different directions from grid intersections 46. The grid may also define a grid x-axis and a grid y-axis, which coincide with the virtual grid lines 45 of the coding pattern 40.

As briefly described above, the pixels on the display 20 also provide a spatial frequency. Further, the display 20 is overlaid by marks 47 arranged according to a grid having a grid size defining a spatial frequency of the marks 47 on the product 30. This implies that there are two periodic structures which are arranged in a superimposed manner. Hence, a convolution of these spatial frequencies or different integer multiples of these spatial frequencies may form another resulting frequency. If the resulting frequency is within the frequency range perceptible by a human being, i.e. the resulting frequency is quite small, the user may see a moiré pattern on the display 20. The moiré pattern may be very distinctive and severely affect the visibility of the displayed image.

It is therefore desirable to ensure that a moiré pattern is not formed on the display 20. One way of ensuring that a moiré pattern is not formed is to ensure that the grid size of the coding pattern 40 is adapted to the pixel pitch of the display 20. However, the coding pattern 40 may alternatively be rotated in relation to the display 20 such that the grid x-axis is offset by an angle with respect to the array x-axis. The rotation of the coding pattern 40 may provide a relationship between the grid of the coding pattern 40 and the array of pixels such that a moiré pattern is unlikely to arise.

Thanks to the rotation of the coding pattern 40, the same product 30 may be used with different displays 20 without any need to consider whether the pixel pitch of the display 20 is compatible with the grid size of the coding pattern 40. This facilitates manufacturing of a portable product 30 which may be used with different displays 20.

Also, the same grid size of the coding pattern 40 may always be used. This implies that a reading device 50 for reading the coding pattern 40 may be adjusted and optimized for reading a coding pattern 40 having a specific grid size. Further, the same reading device 50 may be used for reading the coding pattern 40 regardless of which type of display 20 the coding pattern 40 is applied to.

Furthermore, it may be advantageous to use a coding pattern 40 which is rotated in relation to the display 20, even if the coding pattern 40 is arranged on a product 30 that is fixedly mounted to the display 20 during manufacture of the display 20. In such a situation, the pixel pitch of the display 20 on which the coding pattern 40 will be superimposed is known and, therefore, it is possible to adapt the grid size of the coding pattern 40 to this pixel pitch. For instance, the grid size may be set to equal an integer multiple of the pixel pitch. However, the grid size needs to very closely meet the desired value in order not to give rise to moiré effects. Therefore, adapting the grid size of the coding pattern 40 to the pixel pitch of the display 20 may impose difficult requirements on manufacturing accuracy. Hence, the yield in production may be improved by rotating the coding pattern 40 in relation to the display 20.

As described above, the image sensor 54 of a reading device 50 may be adapted to be able to detect the coding pattern 40. Nevertheless, the size of the features of the coding pattern 40 may appropriately be arranged within certain limits in order to suit the image sensor 54.

In one embodiment, the grid size of the coding pattern 40 is approximately 300 µm. Of course, other grid sizes may be used as well. For instance, the grid size may be in the range of 10 µm to 2 mm.

The diameter of the scattering dots 42 may be adapted to the grid size of the coding pattern 40. For instance, the diameter of the scattering dots 42 may be between 10-50% of the grid size. This implies that the diameter of the scattering dots 42 may be in the range of a few µm up to 1 mm.

The invention has mainly been described above with reference to a few embodiments. However, as is readily appreciated by a person skilled in the art, other embodiments than the ones disclosed above are feasible.

For instance, even though the product has been described above as intended to be applied to a display, the product may be applied to other surfaces as well. The product may be applied to a clear glass whiteboard or a window. In these cases, the product is applied to a surface that may appear dark to an image sensor that is sensitive to infrared radiation. The use of an absorbing layer 36 as indicated in Fig. 3D may be required. Therefore, it is suitable to use the product on these surfaces, as the product may provide a coding pattern which comprises dots that appear bright to an image sensor that is sensitive to infrared radiation.

## Claims

1. A product (30), which comprises
a sheet (32), which is transparent to visible radiation, and
a coding pattern (40), which comprises scattering dots (42) arranged on the sheet (32) to code information, the scattering dots (42) being arranged to diffusely scatter radiation incident thereon,
**characterized by** the coding pattern (40) further comprising reflecting dots (44) arranged on the sheet (32) in correspondence with the scattering dots (42), the reflecting dots (44) being arranged to specularly reflect radiation incident thereon.

2. The product according to claim 1, wherein the scattering dots (42) are coloured to absorb visible radiation while diffusely scattering infrared radiation.

3. The product according to claim 1 or 2, wherein the reflecting dots (44) are arranged to reflect visible and infrared radiation.

4. The product according to claim 3, wherein the reflecting dots (44) comprise a metallic material.

5. The product according to claim 1 or 2, wherein the reflecting dots (44) are arranged to reflect only infrared radiation.

6. The product according to claim 5, wherein the reflecting dots (44) comprise multiple layers of dielectric material.

7. The product according to any one of the preceding claims, wherein the scattering dots (42) comprise white ink or white pigment.

8. The product according to any one of the preceding claims, wherein each reflecting dot (44) is smaller than the corresponding scattering dot (42).

9. The product according to any one of the preceding claims, wherein the scattering dots (42) code information by their displacement from a nominal position.

10. The product according to any one of the preceding claims, wherein the coding pattern (40) further comprises absorbing dots (46) for absorbing visible radiation, said absorbing dots (46) being arranged on the sheet (32) in correspondence with the scattering dots (42) and the reflecting dots (44).

11. The product according to any one of the preceding claims, further comprising an absorbing layer (36) for absorbing infrared radiation.

12. A display (20), which comprises:
a coding pattern (40), which comprises scattering dots (42) arranged on a surface on or inside the display (20) to code information, the scattering dots (42) being arranged to diffusely scatter radiation incident thereon,
**characterized by** the coding pattern (40) further comprising reflecting dots (44) arranged on the surface in correspondence with the scattering dots (42), the reflecting dots (44) being arranged to specularly reflect radiation incident thereon.

## Patentansprüche

1. Produkt (30), welches umfasst:
eine Folie (32), die für sichtbare Strahlung durchlässig ist,
ein Codierungsmuster (40), das Streupunkte (42) umfasst, die auf der Folie (32) angeordnet sind, um Informationen zu codieren, wobei die Streupunkte (42) so angeordnet sind, dass sie darauf auftreffende Strahlung diffus streuen,
**dadurch gekennzeichnet, dass** das Codierungsmuster (40) ferner Reflexionspunkte (44) umfasst, die auf der Folie (32) in Entsprechung mit den Streupunkten (42) angeordnet sind, wobei die Reflexionspunkte (44) so angeordnet sind, dass sie darauf auftreffende Strahlung spiegelnd reflektieren.

2. Produkt nach Anspruch 1, wobei die Streupunkte (42) farbig sind, um sichtbare Strahlung zu absorbieren, während sie Infrarotstrahlung diffus streuen.

3. Produkt nach Anspruch 1 oder 2, wobei die Reflexionspunkte (44) so angeordnet sind, dass sie sichtbare und Infrarotstrahlung reflektieren.

4. Produkt nach Anspruch 3, wobei die Reflexionspunkte (44) ein metallisches Material umfassen.

5. Produkt nach Anspruch 1 oder 2, wobei die Reflexionspunkte (44) so angeordnet sind, dass sie nur Infrarotstrahlung reflektieren.

6. Produkt nach Anspruch 5, wobei die Reflexionspunkte (44) mehrere Schichten dielektrischen Materials umfassen.

7. Produkt nach einem der vorhergehenden Ansprüche, wobei die Streupunkte (42) weiße Tinte oder weißes Pigment umfassen.

8. Produkt nach einem der vorhergehenden Ansprüche, wobei jeder Reflexionspunkt (44) kleiner als der entsprechende Streupunkt (42) ist.

9. Produkt nach einem der vorhergehenden Ansprüche, wobei die Streupunkte (42) durch ihre Verschiebung von einer Nennlage Informationen codieren.

10. Produkt nach einem der vorhergehenden Ansprüche, wobei das Codierungsmuster (40) ferner Absorptionspunkte (46) zum Absorbieren von sichtbarer Strahlung umfasst, wobei die Absorptionspunkte (46) auf der Folie (32) in Entsprechung mit den Streupunkten (42) und den Reflexionspunkten (44) angeordnet sind.

11. Produkt nach einem der vorhergehenden Ansprüche, ferner umfassend eine Absorptionsschicht (36) zum Absorbieren von Infrarotstrahlung.

12. Anzeige (20), welche umfasst:
ein Codierungsmuster (40), das Streupunkte (42) umfasst, die auf einer Oberfläche auf oder innerhalb der Anzeige (20) angeordnet sind, um Informationen zu codieren, wobei die Streupunkte (42) so angeordnet sind, dass sie darauf auftreffende Strahlung diffus streuen,
**dadurch gekennzeichnet, dass** das Codierungsmuster (40) ferner Reflexionspunkte (44) umfasst, die auf der Oberfläche in Entsprechung mit den Streupunkten (42) angeordnet sind, wobei die Reflexionspunkte (44) so angeordnet sind, dass sie darauf auftreffende Strahlung spiegelnd reflektieren.

## Revendications

1. Produit (30) comportant
une feuille (32) qui est transparente au rayonnement visible, et
un motif (40) de codage qui comporte des points (42) de dispersion agencés sur la feuille (32) pour coder des informations, les points (42) de dispersion étant agencés pour disperser de façon diffuse un rayonnement incident sur ceux-ci,
**caractérisé en ce que** le motif (40) de codage comporte en outre des points (44) de réflexion agencés sur la feuille (32) en correspondance avec les points (42) de dispersion, les points (44) de réflexion étant agencés pour réfléchir de façon spéculaire un rayonnement incident sur ceux-ci.

2. Produit selon la revendication 1, les points (42) de dispersion étant colorés pour absorber le rayonnement visible tout en dispersant de façon diffuse un rayonnement infrarouge.

3. Produit selon la revendication 1 ou 2, les points (44) de réflexion étant agencés pour réfléchir le rayonnement visible et infrarouge.

4. Produit selon la revendication 3, les points (44) de réflexion comportant un matériau métallique.

5. Produit selon la revendication 1 ou 2, les points (44) de réflexion étant agencés pour ne réfléchir que le rayonnement infrarouge.

6. Produit selon la revendication 5, les points (44) de réflexion comportant des couches multiples de matériau diélectrique.

7. Produit selon l'une quelconque des revendications précédentes, les points (42) de dispersion comportant une encre blanche ou un pigment blanc.

8. Produit selon l'une quelconque des revendications précédentes, chaque point (44) de réflexion étant plus petit que le point (42) de dispersion correspondant.

9. Produit selon l'une quelconque des revendications précédentes, les points (42) de dispersion codant des informations par leur écart par rapport à une position nominale.

10. Produit selon l'une quelconque des revendications précédentes, le motif (40) de codage comportant en outre des points (46) d'absorption destinés à absorber le rayonnement visible, lesdits points (46) d'absorption étant agencés sur la feuille (32) en correspondance avec les points (42) de dispersion et les points (44) de réflexion.

11. Produit selon l'une quelconque des revendications précédentes, comportant en outre une couche (36) d'absorption destinée à absorber le rayonnement infrarouge.

12. Afficheur (20) comportant :
un motif (40) de codage qui comporte des points (42) de dispersion agencés sur une surface située sur ou à l'intérieur de l'afficheur (20) pour coder des informations, les points (42) de dispersion étant agencés pour disperser de façon diffuse un rayonnement incident sur ceux-ci,
**caractérisé en ce que** le motif (40) de codage comporte en outre des points (44) de réflexion agencés sur la surface en correspondance avec les points (42) de dispersion, les points (44) de réflexion étant agencés pour réfléchir de façon spéculaire un rayonnement incident sur ceux-ci.
